# FASCICULE DE BREVET EUROPEEN

(11) **EP 0 679 698 B1**
(45) Date de publication et mention de la délivrance du brevet: **15.07.1998**
(21) Numéro de dépôt: 95400914.8
(22) Date de dépôt: 25.04.1995
(51) Int. Cl.: C09D 5/29, C09C 1/00, B44F 1/14

(54) **Paillettes multicolores, leur procédé de fabrication et produit de décoration utilisant lesdites paillettes**
Mehrfarbige Blättchen und Verfahren zu deren Herstellung sowie dekoratives Produkt das diese Blättchen verwendet
Multicoloured flakes, process for their manufacture and decorative product using the said flakes

(30) Priorité: 26.04.1994 FR 9405000
(43) Date de publication de la demande: 02.11.1995
(73) Titulaire: SARL QUADRA INDUSTRIES, (société à responsabilité limitée), 94800 Villejuif (FR)
(72) Inventeur: Marillier, Robert, F-21121 Hauteville-les-Dijon (FR)
(74) Mandataire: Keib, Gérard

(56) Documents cités:
- WO-A-93/23251
- DE-A- 3 607 127
- FR-A- 2 646 165
- US-A- 5 154 765

## Description

La présente invention concerne de nouvelles paillettes multicolores utilisées notamment dans les produits de décoration de surfaces.

Elle concerne également un procédé de préparation de ces nouvelles paillettes.

Elle concerne enfin un produit de décoration utilisant les nouvelles paillettes de l'invention.

On désignera dans ce qui suit de façon non limitative et pour la commodité du langage par "produits de décoration de surfaces" les peintures, vernis, revêtements de sol, papiers peints, revêtements en matière plastique ou en toile, utilisés notamment dans la décoration des sols, murs, plafonds, panneaux de séparation ou de présentation, etc.

Il existe de nombreux procédés pour donner une apparence plus agréable aux surfaces de lieux publics, d'habitations ou similaires. Parmi ceux-ci la pose d'une ou plusieurs couches de peinture destinées à cacher à la vue les matériaux ayant servi la réalisation de la surface est couramment utilisée. Il a été ainsi développé de nombreux types différents de peinture, en fonction de la nature des surfaces à revêtir et de l'aspect final désiré. Une catégorie de peinture couramment employée est celle dite "à paillettes" qui donne une impression de relief à la surface sur laquelle elle est appliquée.

On connaît d'après le FR-A-2 646 165, une peinture comportant des paillettes en matière plastique colorée mélangées avec une résine et son solvant, cette peinture étant appliquée par projection sous pression. Les paillettes utilisées ont des formes, des dimensions et des couleurs quelconques.

Ce type de revêtement comprend généralement une première couche de peinture dite peinture de base ou de support sur laquelle sont projetées des paillettes colorées uniformément avec un ensemble comprenant un compresseur et un pistolet à gravité pour paillettes sèches, par exemple celui commercialisé sous la marque SAGOLA®. La projection étant effectuée avant que la première couche ne soit sèche, les paillettes de faible masse collent sur la couche de support en la recouvrant partiellement ou totalement selon l'effet désiré. Une couche de vernis est ensuite appliquée sur la surface, pour solidifier l'adhésion des paillettes sur la couche de support et recouvrir l'ensemble d'une couche protectrice.

Ce type de peinture pennet d'obtenir une surface colorée uniformément en utilisant un lot de paillettes d'une seule couleur mais permet également d'obtenir des surfaces multicolores en utilisant plusieurs lots de paillettes de couleurs différentes qui sont mélangées avant la projection sur la surface.

Dans ce dernier cas, le procédé présente un certain nombre d'inconvénients. En effet, l'utilisateur doit tout d'abord effectuer l'opération de mélange des différents lots de paillettes d'une façon très homogène pour ne pas risquer d'obtenir lors de la projection, des zones de la surface recouvertes d'une seule sorte de paillettes. En outre, il doit stocker un grand nombre de lots de paillettes de couleurs différentes afin de pouvoir disposer des couleurs nécessaires à l'effet multicolore souhaité sur la surface. Les paillettes étant généralement commercialisées dans des récipients d'un poids variant entre 15 kilogrammes et 20 kilogrammes, il s'ensuit des contraintes et des charges de stockage importantes.

L'invention a pour but principal de remédier aux inconvénients ci-dessus en proposant de nouvelles paillettes qui permettent de résoudre en grande partie les problèmes liés au stockage et au mélange.

Selon un premier aspect de l'invention, les nouvelles paillettes multicolores à deux faces de l'invention, d'une épaisseur comprise entre environ 60 µm et environ 200 µm se caractérisent en ce qu'elles consistent en une pellicule de couleur uniforme d'un polymère, copolymère ou terpolymère, ou un mélange de ceux-ci, comportant sur l'une seulement de ses faces un revêtement décoratif différent de la couleur uniforme, ledit revêtement décoratif recouvrant au moins partiellement ladite face et en ce que ce revêtement est déposé sous forme de points ou taches plus ou moins espacés et diffus, déposés de façon non uniforme.

Selon l'invention, les paillettes comportent donc une première et une seconde face.

La couleur uniforme de la première face des paillettes correspond à la couleur de la pellicule de polymère, copolymère ou terpolymère, ou un mélange de ceux-ci, utilisé comme matière première pour la préparation de la paillette. La couleur en elle-même n'est pas critique et peut être choisie librement parmi les teintes disponibles dans l'industrie de la peinture.

Les matériaux utilisables pour la pellicule peuvent être choisis parmi les polymères, copolymères, terpolymères, ou un mélange de ceux-ci. On citera, à titre d'exemples non limitatifs, les polymères à base acrylique ou acétate de polyvinyle, les copolymères à base styrène-acrylique, vinyle-versatate ou vinyle-éthylène, les terpolymères à base vinyle-versatate-acrylate ou vinyle-éthylène-chlorure, etc.

La seconde face des paillettes de l'invention comporte au moins partiellement un revêtement décoratif différent de la couleur uniforme de la première face. Ce revêtement décoratif différent peut prendre différentes formes.

Selon une première forme de réalisation de la présente invention, la seconde face est de couleur différente de celle de la première face et est colorée sous forme de points ou tâches plus ou moins espacés ou diffus.

Les matériaux utilisables pour le revêtement décoratif selon cette première forme de réalisation de l'invention peuvent être choisis parmi les peintures, encres, vernis et/ou similaires couramment employés dans l'industrie de la peinture.

On citera, à titre illustratif, les peintures-émulsions, les peintures glycérophtaliques, les peintures solubles à l'eau, les peintures au four, les peintures aminoplastes, les peintures époxy, les peintures polyuréthannes, etc.

Les encres utilisables peuvent être choisies parmi notamment les encres typographiques, les encres offset, les encres hélio, les encres à vernis, les encres à alcool, les encres magnétiques, etc.

Les vernis utilisables peuvent être choisis parmi notamment les vernis à l'huile, les vernis aux résines naturelles ou artificielles, les vernis cellulosiques, les vernis aux produits bitumineux, les vernis au latex, les vernis aux caoutchoucs, les vernis naturels, etc.

Selon une variante de réalisation, le revêtement décoratif comprend une couche d'au moins une peinture, encre, vernis et/ou similaire. On pourra par exemple utiliser plusieurs peintures de couleurs différentes pour obtenir une seconde face multicolore.

Selon une autre forme de réalisation de la présente invention, la seconde face comporte des pigments de couleur identique ou différente entre eux, par exemple des pigments sensibles à la chaleur ou aux ultraviolets, des pigments nacrés, notamment de type IRIODINE® ou des pigments non miscibles entre eux, couramment utilisés dans l'industrie de la peinture.

Selon encore une autre forme de réalisation de la présente invention, la seconde face comporte des particules de métal, notamment d'aluminium, de cuivre, de nickel, de fer, etc., en particulier sous forme d'oxydes.

Selon encore une autre forme de réalisation de la présente invention, la seconde face comporte des particules minérales, notamment des particules de mica, de silice, etc.

Selon encore une autre forme de réalisation de la présente invention, la seconde face comporte des motifs imprimés, par exemple par impression par jet d'encre ou par les techniques de transfert conventionnelles.

Il va de soi que les formes de réalisation décrites ci-dessus peuvent être combinées entre elles pour obtenir des paillettes dans lesquelles la seconde face comporte, par exemple, à la fois une peinture et des pigments ou à la fois des pigments et des particules minérales.

Avantageusement, les paillettes de l'invention ont une épaisseur comprise entre environ 60 µm et environ 200 µm, de préférence entre environ 90 µm et environ 110 µm.

L'invention a également pour objet un procédé de préparation des paillettes de l'invention.

Selon ce second aspect de l'invention, le procédé de préparation de paillettes multicolores à deux faces, consistant en une pellicule de couleur uniforme d'un polymère, copolymère ou terpolymère, ou un mélange de ceux-ci, comportant sur l'une seulement de ses deux faces un revêtement décoratif différent de la couleur uniforme, ledit revêtement décoratif recouvrant au moins partiellement ladite face, se caractérise en ce qu'il comprend les étapes :
- de dépôt d'une matière première sur une bande transporteuse, à une vitesse comprise de préférence entre environ 10 et environ 25 m/min, et à une épaisseur comprise entre environ 80 µm et environ 240 µm, de façon à obtenir un film humide;
- de dépôt sur le film humide de matière première obtenu à l'étape précédente d'un revêtement décoratif, à une vitesse comprise de préférence entre environ 10 m/min. et environ 25 m/min.;
- de séchage du film transporté obtenu à l'étape précédente à une température comprise de préférence entre environ 80°C et environ 150°C, de façon à obtenir un film sec;
- de délaminage et concassage du film sec obtenu à l'étape précédente; et
- de broyage des fragments de film sec obtenus à l'étape précédente.

La matière première utilisée dans le procédé de l'invention consiste en un polymère, copolymère, terpolymère ou un mélange de ceux-ci, tels que définis dans ce qui précède, sous la forme d'une émulsion aqueuse.

La matière première utilisée peut être de couleur blanche ou d'une autre couleur.

Avantageusement, la matière première possède une viscosité comprise de préférence entre environ 10 N.s/m² et environ 30 N.s/m².

Selon l'invention, la matière première est déposée, à partir d'un réservoir, sur une bande transporteuse.

Le choix de la bande transporteuse est essentiellement lié à l'opération de délaminage ultérieure. La bande transporteuse doit en effet posséder un bon pouvoir mouillant permettant une répartition homogène du film humide de matière première lors de l'enduction et posséder également un pouvoir d'adhérence faible permettant un délaminage satisfaisant.

On citera, à titre d'exemples non limitatifs de bandes utilisables, les tapis de polyester recouvert de silicone, les papiers techniques siliconés ou les tissus recouverts de TEFLON®.

L'épaisseur du film de matière première déposée est comprise entre environ 80 µm et environ 240 µm et est réglée par exemple avec une lame d'enduction disposée près de la surface du tapis. De préférence, la matière première est déposée sur la bande transporteuse à une vitesse comprise entre environ 10 m/min. et environ 25 m/min.

Le procédé selon l'invention comprend ensuite le dépôt d'un revêtement décoratif sur le film humide formé par la matière première. Avantageusement, le revêtement décoratif consiste en une couche d'au moins une peinture, encre, vernis et/ou similaires tels que définis dans ce qui précède.

Avantageusement, le revêtement décoratif possède une viscosité comprise de préférence entre environ 0,1 N.s/m² et environ 0,25 N.s/m².

Le dépôt du revêtement décoratif peut être réalisé par tout moyen approprié et dépend généralement de l'aspect final souhaité du revêtement. Ainsi, lorsque le revêtement consiste en une couche de peinture uniforme ou en des points de peinture disposés de façon aléatoire sur le film humide, le dépôt peut être réalisé par pulvérisation, notamment au pistolet.

Il est également réalisé par pulvérisation, notamment au pistolet lorsque le revêtement décoratif consiste en pigments de peinture, en particules de métal ou minérales.

L'homme du métier pourra, par de simples essais de mise au point, déterminer les conditions optimales de pulvérisation du revêtement décoratif, de façon à obtenir soit un dépôt uniforme, soit des points ou tâches déposées de façon non uniforme. De préférence, la pression d'air de pulvérisation est comprise entre environ 0,1 et environ 0,35 MPa, et la pression du produit en sortie de pistolet est comprise entre environ 0,05 et environ 0,3 MPa.

Lorsque le revêtement décoratif consiste en un motif imprimé, le dépôt peut être réalisé par impression par jet d'encre ou par transfert.

Le film humide obtenu est ensuite séché, à une température comprise entre environ 80°C et environ 150°C, par exemple par passage dans un four à air pulsé chauffé par fluide caloporteur.

Le film sec est ensuite délaminé et concassé à partir de la bande transporteuse pour réduire une première fois la taille des paillettes, puis passé dans un broyeur, par exemple de type Adler-Buzzi Renato type C2, afin d'obtenir des paillettes d'une taille réduite encore une fois. Bien que la taille des paillettes ne soit pas critique en elle-même, une taille moyenne des paillettes variant entre environ 1 mm et environ 10 mm permet d'obtenir une bonne adhérence des paillettes et un effet esthétique satisfaisants.

L'invention a également pour objet un produit de décoration de surfaces utilisant les paillettes de l'invention.

Le produit de décoration de surfaces selon l'invention se caractérise en ce qu'il comprend :
- une peinture de support, notamment de type acrylique;
- un vernis de protection, notamment de type acrylique ou polyuréthanne;
- au moins un lot de paillettes selon l'invention.

Le produit de décoration selon l'invention est utilisé comme suit :

La peinture de support est appliquée sur la surface à décorer. Avant que celle-ci ne soit sèche, les paillettes de l'invention sont projetées sur la peinture de support, par exemple avec un appareil de type SAGOLA®.

En raison de la densité pratiquement équivalente entre les deux faces, chaque paillette projetée se colle aléatoirement sur la peinture de support selon l'une ou l'autre de ses faces. La surface recouverte de paillettes aura ainsi un aspect multicolore comportant à la fois des paillettes offrant à la vue leur face de couleur uniforme et des paillettes offrant à la vue leur face revêtue du motif décoratif différent, les pourcentages de paillettes collées par leur première face de couleur uniforme étant sensiblement toujours identiques et les pourcentages de paillettes collées par leur seconde face de revêtement différent étant également sensiblement toujours identiques.

Le vernis est ensuite appliqué sur les paillettes afin d'assurer une bonne protection de la surface et un meilleur aspect final.

L'invention permet donc de résoudre les problèmes de stockage et de mélange des paillettes conventionnelles utilisées jusqu'à présent. En effet, un seul lot de paillettes suffit à obtenir une surface multicolore. De plus, l'opération de mélange de différentes paillettes de couleurs différentes de l'art antérieur est supprimée.

Bien que l'invention ait été décrite dans ce qui précède en utilisant un seul lot de paillettes, il reste bien évidemment possible d'utiliser plusieurs lots de paillettes différentes selon l'invention en fonction de l'effet final désiré. Dans ce cas, les problèmes liés au stockage sont sensiblement réduits en utilisant les paillettes de l'invention, puisqu'un seul lot de paillettes permet d'obtenir le résultat nécessitant au moins deux lots de paillettes de l'art antérieur.

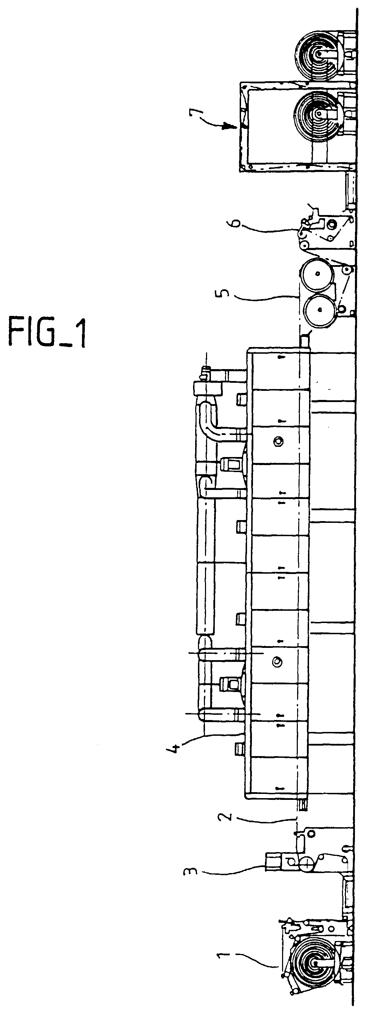

Des avantages et caractéristiques supplémentaires de l'invention apparaîtront encore à la lumière de la description plus détaillée qui suit d'un exemple de réalisation de l'invention, donné à titre illustratif et non limitatif, ainsi qu'à la figure 1 qui s'y rapporte et qui représente une vue schématique latérale d'un dispositif de mise en oeuvre du procédé de fabrication des paillettes de l'invention.

En se référant à la figure 1, les paillettes de l'invention sont fabriquées à l'aide d'une machine comprenant une dérouleuse pour papier ou tissu 1 autour de laquelle est enroulé un tapis transporteur 2. Le tapis transporteur consiste en une bande de polyester recouvert de silicone.

Une cuve de 500 litres contenant une émulsion acrylique de viscosité moyenne de 21 N.s/m² (telle que mesurée avec un viscosimètre Brookfield, axe 6, 20 T/min.) sert à l'alimentation, soit par pompe, soit manuellement, d'un cylindre d'enduction 3. La matière première est déposée sur le tapis transporteur 2 défilant à une vitesse de 15 m/min.

L'épaisseur du film de peinture déposé est réglée par l'intermédiaire d'une lame d'enduction, de façon à obtenir un film d'une épaisseur d'environ 120 µm.

Le tapis transporteur 2 comportant le film humide arrive ensuite au-dessous d'une rampe (non représentée sur la figure) équipée de pistolets à gouttelettes de type XV avec circulation en tête (disponibles commercialement sous la dénomination VOLUMAIR®) munis de buses de diamètre 1,5 mm et de diamètre de projection de 2 mm. Les pistolets sont alimentés par des pompes, elles-mêmes reliées à une réserve de peinture de type acrylique, disponible commercialement auprès de la société S.N.F.P.

Cette seconde peinture, qui constituera le motif décoratif, possède une viscosité de l'ordre de 0,15-0,17 N.s/m² et est d'une couleur différente de la peinture de base. A cette étape du procédé de l'invention, la peinture est projetée sur le film de peinture de base humide tandis que le tapis transporteur 2 continue de défiler, à une pression d'air de pulvérisation comprise entre environ 0,25 MPa et 0,3 MPa et à une pression de produit d'environ 0,25 MPa.

Le tapis transporteur 2 comportant à sa surface le film de peinture de base humide sur lequel a été projeté la peinture décorative sous forme de gouttelettes passe ensuite dans un four 4 muni de conduites d'aération, chauffé à une température de 120°C.

Une fois sorti du four 4, le tapis transporteur 2 comportant sur sa surface le film sec passe dans des cylindres de refroidissement 5 puis dans l'unité de délaminage 6. Cette unité, outre la séparation du film sec du tapis transporteur 2 est munie d'un dispositif permettant un concassage grossier du film.

A la fin du procédé, le tapis transporteur 2 passe dans l'installation 7 consistant en un enrouleur de papier ou de tissu muni d'un dispositif d'alignement et de réglage de la tension du tapis.

Les paillettes obtenues après une nouvelle étape de broyage à partir du film sec récupéré après délaminage et concassage possèdent une face de la couleur de la peinture de base et l'autre face comportant des gouttelettes de la seconde peinture projetée à partir de la rampe de pistolets. Les paillettes ainsi obtenues possèdent une granulométrie d'environ 3 mm.

Il va de soi que l'invention ne se limite pas à la forme de réalisation particulière qui a été décrite dans ce qui précède. Diverses modifications peuvent être apportées aussi bien par exemple dans la nature des matériaux utilisés que dans la forme du revêtement décoratif ou les réglages des différentes étapes du procédé, sans pour autant sortir des éléments caractéristiques de l'invention, dont l'étendue est déterminée par les revendications qui suivent.

## Revendications

1. Paillettes à deux faces consistant en une pellicule d'un polymère, copolymère ou terpolymère ou d'un mélange de ceux-ci, d'une épaisseur comprise entre environ 60 µm et environ 200 µm et d'une couleur uniforme prédéterminée, adaptées à être projetées sur une couche de peinture constituant un support, l'ensemble étant ensuite recouvert d'un vernis, afin de constituer un produit de décoration de surfaces,
caractérisées en ce que ces paillettes comportent sur l'une seulement de leurs faces un revêtement décoratif d'une couleur différente de ladite couleur uniforme prédéterminée, et recouvrant au moins partiellement ladite face, et en ce que ce revêtement décoratif est réalisé sous forme de points ou tâches plus ou moins espacés ou diffus, déposés de façon non uniforme.

2. Paillettes selon la revendication 1, caractérisées en ce que le revêtement décoratif est sous forme de points disposés de façon aléatoire.

3. Paillettes selon la revendication 1 ou 2, caractérisées en ce que les points ou tâches du revêtement décoratif sont disposés sur un film qui est ensuite broyé pour préparer lesdites paillettes.

4. Paillettes selon l'une quelconque des revendications 1 à 3, caractérisées en ce que ledit revêtement consiste en une couche non uniforme d'au moins une peinture, encre, vernis et/ou similaires, ou en des pigments, notamment des pigments sensibles à la chaleur ou aux ultraviolets, des pigments non miscibles entre eux, des pigments nacrés, ou en des motifs imprimés.

5. Paillettes selon l'une des revendications 1 à 3, caractérisées en ce que ledit revêtement consiste en des particules minérales, notamment de mica, de silice.

6. Paillettes selon l'une des revendications 1 à 3, caractérisées en ce que ledit revêtement consiste en des particules de métal, notamment sous forme d'oxyde.

7. Paillettes selon la revendication 6, caractérisées en ce que ledit oxyde comprend les oxydes d'ion métal, notamment de fer, de nickel, de cuivre, d'aluminium.

8. Paillettes selon l'une quelconque des revendications 1 à 7, caractérisées en ce que la pellicule de couleur uniforme consiste notamment en un polymère à base acétate de polyvinyle ou acrylique, un copolymère à base styrène-acrylique, vinyle-versatate ou vinyle-éthylène, un terpolymère à base vinyle-versatate-acrylate ou vinyle-éthylène-chlorure.

9. Paillettes selon l'une quelconque des revendications 1 à 8, caractérisées en ce que la taille moyenne des paillettes varie entre 1 mm environ et 10 mm environ.

10. Procédé de préparation de paillettes à deux faces selon l'une quelconque des revendications 1 à 9, ces paillettes consistant en une pellicule d'un polymère, copolymère ou terpolymère ou d'un mélange de ceux-ci, de couleur uniforme et comportant sur l'une seulement de leurs faces un revêtement décoratif différent de la couleur uniforme, ledit revêtement uniforme recouvrant au moins partiellement ladite face, caractérisé en ce qu'il comprend les étapes :
- de dépôt d'une matière première sur une bande transporteuse, à une vitesse comprise de préférence entre environ 10 et environ 25 m/min. et à une épaisseur comprise de préférence entre environ 80 µm et environ 240 µm, de façon à obtenir un film humide;
- de dépôt sur le film humide de matière première d'un revêtement décoratif sous forme de points ou tâches plus ou moins espacés ou diffus, déposés de façon non uniforme ;
- de séchage du film transporté à une température comprise de préférence entre environ 80°C et environ 150°C;
- de délaminage et concassage du film sec; et
- de broyage des fragments de film sec obtenus à l'étape précédente.

11. Procédé selon la revendication 10, caractérisé en ce que la matière première consiste en un polymère, copolymère ou terpolymère en émulsion aqueuse, ou un mélange de ceux-ci, de viscosité comprise de préférence entre environ 10 N.s/m² et environ 30 N.s/m².

12. Procédé selon l'une quelconque des revendications 10 ou 11, caractérisé en ce que le revêtement décoratif consiste en une couche uniforme ou non uniforme d'au moins une peinture, encre, vernis et/ou similaires, notamment une peinture acrylique, de viscosité comprise de préférence entre environ 0,1 N.s/m² et environ 0,25 N.s/m²., en des pigments, notamment des pigments sensibles à la chaleur ou aux ultraviolets, des pigments non miscibles entre eux, des pigments nacrés, en des motifs imprimés, en des particules minérales ou métalliques.

13. Procédé selon l'une quelconque des revendications 10 à 12, caractérisé en ce que la bande transporteuse consiste en un tapis de polyester recouvert de silicone.

14. Procédé selon l'une quelconque des revendications 10 à 13, caractérisé en ce que le dépôt du revêtement décoratif est réalisé notamment par pulvérisation, impression par jet d'encre ou transfert de motif imprimé.

15. Procédé selon la revendication 14, caractérisé en ce que la pression d'air de pulvérisation est comprise entre environ 0,1 et environ 0,35 MPa.

16. Produit de décoration de surfaces, caractérisé en ce qu'il comprend :
- une peinture de support, notamment une peinture de type acrylique, appliquée sur la surface à décorer ;
- au moins un lot de paillettes selon l'une quelconque des revendications 1 à 9, ces paillettes ayant été projetées sur la peinture de support afin de se coller sur celle-ci:
- un vernis de protection, notamment un vernis de type acrylique appliqué sur la surface et sur les paillettes après projection de celles-ci.

17. Produit de décoration de surfaces selon la revendication 16, caractérisé en ce que les paillettes sont collées aléatoirement sur la peinture de support selon l'une ou l'autre de leurs faces respectives, et en ce que le pourcentage de paillettes collées par leur première face de couleur uniforme et le pourcentage de paillettes collées par leur seconde face comportant ledit revêtement décoratif sont sensiblement toujours identiques.

## Patentansprüche

1. Zweiseitige Pailletten bestehend aus einem Überzug aus einem Polymer, Copolymer oder Terpolymer oder aus einer Mischung derselben mit einer Dicke zwischen etwa 60 µm und etwa 200 µm und von vorbestimmter, einheitlicher Farbe, die geeignet sind, auf eine ein Trägermaterial bildende Farbschicht aufgebracht zu werden, wobei das Ganze anschließend mit Lack beschichtet wird, so daß es ein Produkt zur Oberflächengestaltung darstellt,
dadurch gekennzeichnet, daß diese Pailletten auf nur einer ihrer Seiten eine diese Seite wenigstens teilweise bedeckende Dekorbeschichtung mit einer von der vorbestimmten, einheitlichen Farbe verschiedenen Farbe aufweisen und daß diese Dekorbeschichtung in Form von mehr oder weniger beabstandeten oder verstreuten, nicht einheitlich aufgebrachten Punkten oder Tupfen ausgebildet ist.

2. Pailletten nach Anspruch 1, dadurch gekennzeichnet, daß die Dekorbeschichtung in Form von willkürlich angeordneten Punkten ausgebildet ist.

3. Pailletten nach Anspruch 1 oder 2, dadurch gekennzeichnet, daß die Punkte oder Tupfen der Dekorbeschichtung auf einer Schicht vorgesehen sind, die dann zur Herstellung der Pailletten zerkleinert wird.

4. Pailletten nach einem der Ansprüche 1 bis 3, dadurch gekennzeichnet, daß die Beschichtung aus einer nicht einheitlichen Schicht aus wenigstens einer Farbe, Tinte, einem Lack und/oder dergleichen oder aus Pigmenten, insbesondere aus wärme- oder ultraviolettempfindlichen Pigmenten, aus untereinander nicht vermischbaren Pigmenten, perlmuttartigen Pigmenten oder aus aufgedruckten Motiven besteht.

5. Pailletten nach einem der Ansprüche 1 bis 3, dadurch gekennzeichnet, daß die Beschichtung aus Mineralpartikeln, insbesondere Mika oder Kieselerde, besteht.

6. Pailletten nach einem der Ansprüche 1 bis 3, dadurch gekennzeichnet, daß die Beschichtung aus Metallpartikeln, insbesondere in Form von Oxid, besteht.

7. Pailletten nach Anspruch 6, dadurch gekennzeichnet, daß das Oxid die Metallionenoxide, insbesondere von Eisen, Nickel, Kupfer oder Aluminium, umfaßt.

8. Pailletten nach einem der Ansprüche 1 bis 7, dadurch gekennzeichnet, daß der einheitliche Farbüberzug insbesondere aus einem Polymer auf Polyvinyl- oder Acrylazetatbasis oder einem Copolymer auf Acrylstyrol-, Vinylversatat- oder Vinylethylenbasis oder aus einem Terpolymer auf Acrylvinylversatat- oder Vinylethylenchloridbasis besteht.

9. Pailletten nach einem der Ansprüche 1 bis 8, dadurch gekennzeichnet, daß die mittlere Größe der Pailletten zwischen etwa 1 mm und etwa 10 mm variiert.

10. Verfahren zur Herstellung von zweiseitigen Pailletten nach einem der Ansprüche 1 bis 9, wobei diese Pailletten aus einem Überzug einheitlicher Farbe aus einem Polymer, Copolymer oder Terpolymer oder einer Mischung derselben bestehen und auf nur einer ihrer Seiten eine von der einheitlichen Farbe verschiedene Dekorbeschichtung aufweisen, wobei die einheitliche Beschichtung die Seite wenigstens teilweise bedeckt, dadurch gekennzeichnet, daß es die folgenden Schritte umfaßt:
- Ablegen eines Ausgangsmaterials auf ein Förderband mit einer Geschwindigkeit vorzugsweise zwischen etwa 10 und etwa 25 m/min. und mit einer Dicke vorzugsweise zwischen etwa 80 µm und etwa 240 µm zum Erhalt einer feuchten Schicht;
- Aufbringen einer Dekorbeschichtung in Form von mehr oder weniger beabstandeten oder verstreuten, nicht einheitlich aufgebrachten Punkten oder Tupfen auf die feuchte Schicht aus Ausgangsmaterial;
- Trocknen der transportierten Schicht bei einer Temperatur vorzugsweise zwischen etwa 80°C und etwa 150°C;
- Delamination und Grobzerkleinerung der trockenen Schicht; und
- Feinzerkleinerung der im vorhergehenden Schritt erhaltenen, trockenen Schichtfragmente.

11. Verfahren nach Anspruch 10, dadurch gekennzeichnet, daß das Ausgangsmaterial aus einem Polymer, Copolymer oder Terpolymer in einer wäßrigen Emulsion oder aus einer Mischung derselben mit einer Viskosität vorzugsweise zwischen etwa 10 N.s/m² und etwa 30 N.s/m² besteht.

12. Verfahren nach einem der Ansprüche 10 oder 11, dadurch gekennzeichnet, daß die Dekorbeschichtung aus einer einheitlichen oder nicht einheitlichen Schicht aus wenigstens einer Farbe, Tinte, einem Lack und/oder dergleichen, insbesondere einer Acrylfarbe mit einer Viskosität vorzugsweise zwischen etwa 0,1 N.s/m² und etwa 0,25 N.s/m², aus Pigmenten, insbesondere aus wärme- oder ultraviolettempfindlichen Pigmenten, aus untereinander nicht vermischbaren Pigmenten, perlmuttartigen Pigmenten, aus aufgedruckten Motiven und aus Mineral- oder Metallpartikeln besteht.

13. Verfahren nach einer der Ansprüche 10 bis 12, dadurch gekennzeichnet, daß das Förderband aus einem mit Silikon beschichteten Polyesterband besteht.

14. Verfahren nach einem der Ansprüche 10 bis 13, dadurch gekennzeichnet, daß das Aufbringen der Dekorbeschichtung insbesondere durch Sprühen, Tintenstrahldruck oder Druckmotivtransfer stattfindet.

15. Verfahren nach Anspruch 14, dadurch gekennzeichnet, daß der Sprühluftdruck zwischen etwa 0,1 und etwa 0,35 MPa liegt.

16. Produkt zur Oberflächengestaltung, dadurch gekennzeichnet, daß es umfaßt:
- eine auf die zu gestaltende Fläche aufgebrachte Trägerfarbe, insbesondere in Form einer Acrylfarbe;
- wenigstens eine Charge von Pailletten nach einem der Ansprüche 1 bis 9, wobei diese Pailletten auf die Trägerfarbe aufgespritzt werden, um mit dieser zu verkleben;
- einen Schutzlack, insbesondere in Form eines Acryllacks, der auf die Fläche und auf die Pailletten nach deren Aufbringung aufgetragen wird.

17. Produkt zur Oberflächengestaltung nach Anspruch 16, dadurch gekennzeichnet, daß die Pailletten jeweils mit der einen oder anderen Seite willkürlich auf die Trägerfarbe geklebt sind und daß der Anteil der mit der ersten Seite von einheitlicher Farbe aufgeklebten Pailletten und der Anteil der mit der zweiten, die Dekorbeschichtung aufweisenden Seite aufgeklebten Pailletten im wesentlichen immer identisch ist.

## Claims

1. Two-faced flakes consisting of a film of a polymer, copolymer or terpolymer or of a mixture of the latter, with a thickness of between approximately 60 µm and approximately 200 µm and with a predetermined uniform colour, which are suitable for being projected onto a layer of paint constituting a support, the assembly subsequently being covered with a varnish, in order to constitute a product for the decoration of surfaces,
characterized in that these flakes contain, on only one of their faces, a decorative coating, with a colour different from the said predetermined uniform colour, at least partially covering the said face and in that this decorative coating is produced in the form of more or less spaced out or scattered points or spots deposited in a non-uniform way.

2. Flakes according to Claim 1, characterized in that the decorative coating is in the form of randomly arranged points.

3. Flakes according to Claim 1 or 2, characterized in that the points or spots of the decorative coating are arranged on a film which is subsequently ground in order to prepare the said flakes.

4. Flakes according to any one of Claims 1 to 3, characterized in that the said coating is composed of a non-uniform layer of at least one paint, ink, varnish and/or the like or of pigments, in particular pigments which are sensitive to heat or to ultraviolet radiation, pigments which are immiscible with one another, or iridescent pigments, or of printed patterns.

5. Flakes according to one of Claims 1 to 3, characterized in that the said coating is composed of inorganic particles, in particular mica or silica.

6. Flakes according to one of Claims 1 to 3, characterized in that the said coating is composed of metal particles, in particular in the oxide form.

7. Flakes according to Claim 6, characterized in that the said oxide comprises metal ion oxides, in particular iron, nickel, copper or aluminium oxides.

8. Flakes according to any one of Claims 1 to 7, characterized in that the film of uniform colour is composed in particular of a polymer based on poly(vinyl acetate) or acrylic, a copolymer based on styrene-acrylic, vinyl-versatate or vinyl-ethylene, or a terpolymer based on vinyl-versatate-acrylate or vinyl-ethylene-chloride.

9. Flakes according to any one of Claims 1 to 8, characterized in that the mean size of the flakes varies between approximately 1 mm and approximately 10 mm.

10. Process for the preparation of two-faced flakes according to any one of Claims 1 to 9, these flakes being composed of a film of a polymer, copolymer or terpolymer or of a mixture of the latter, of uniform colour, containing, on only one of their faces, a decorative coating different from the uniform colour, the said uniform coating at least partially covering the said face, characterized in that it comprises the stages:
- of deposition of a starting material on a conveyor belt, at a rate preferably of between approximately 10 and approximately 25 m/min and at a thickness preferably of between approximately 80 µm and approximately 240 µm, so as to obtain a wet film;
- of deposition, on the wet film of starting material, of a decorative coating in the form of more or less spaced out or scattered points or spots deposited in a non-uniform way;
- of drying the film, brought to a temperature preferably of between approximately 80°C and approximately 150°C;
- of delaminating and crushing the dry film; and
- of grinding the fragments of dry film obtained in the preceding stage.

11. Process according to Claim 10, characterized in that the starting material is composed of an aqueous emulsion of a polymer, copolymer or terpolymer, or a mixture of the latter, with a viscosity preferably of between approximately 10 N.s/m² and approximately 30 N.s/m².

12. Process according to either one of Claims 10 and 11, characterized in that the decorative coating is composed of a uniform or non-uniform layer of at least one paint, ink, varnish and/or the like, in particular an acrylic paint, with a viscosity preferably of between approximately 0.1 N.s/m² and approximately 0.25 N.s/m², of pigments, in particular pigments which are sensitive to heat or to ultraviolet radiation, pigments which are immiscible with one another, or iridescent pigments, of printed patterns or of inorganic or metallic particles.

13. Process according to any one of Claims 10 to 12, characterized in that the conveyor belt is composed of a polyester belt covered with silicone.

14. Process according to any one of Claims 10 to 13, characterized in that the decorative coating is deposited in particular by spraying, ink jet printing or printed pattern transfer.

15. Process according to Claim 14, characterized in that the spraying air pressure is between approximately 0.1 and approximately 0.35 MPa.

16. Product for the decoration of surfaces, characterized in that it comprises:
- a support paint, in particular a paint of acrylic type, applied to the surface to be decorated;
- at least one batch of flakes according to any one of Claims 1 to 9, these flakes having been projected onto the support paint in order to be bonded to the latter;
- a protective varnish, in particular a varnish of acrylic type, applied to the surface and to the flakes after projection of the latter.

17. Product for the decoration of surfaces according to Claim 16, characterized in that the flakes are bonded randomly to the support paint on one or other of their respective faces and in that the percentage of flakes bonded via their first face of uniform colour and the percentage of flakes bonded via their second face containing the said decorative coating are substantially always identical.
